# FASCICULE DE BREVET EUROPEEN

(11) **EP 2 331 898 B1**
(45) Date de publication et mention de la délivrance du brevet: **27.12.2017**
(21) Numéro de dépôt: 09736444.2
(22) Date de dépôt: 20.07.2009
(51) Int. Cl.: F25J 3/02, C01B 3/38, C01B 32/40, B01D 53/74

(54) **PROCÉDÉ DE GÉNÉRATION ET DE SÉPARATION D'UN MÉLANGE D'HYDROGÈNE ET DE MONOXYDE DE CARBONE PAR DISTILLATION CRYOGÉNIQUE**
VERFAHREN ZUM ERZEUGEN UND TRENNEN EINES WASSERSTOFF-KOHLENMONOXID-GEMISCHES DURCH KRYOGENE DESTILLATION
PROCESS FOR GENERATING AND SEPARATING A HYDROGEN-CARBON MONOXIDE MIXTURE BY CRYOGENIC DISTILLATION

(30) Priorité: 04.08.2008 FR 0855399
(43) Date de publication de la demande: 15.06.2011
(73) Titulaire: L'Air Liquide Société Anonyme pour l'Etude et l'Exploitation des Procédés Georges Claude, 75007 Paris (FR)
(72) Inventeur: HAIK-BERAUD, Natacha, F-94500 Champigny-sur-Marne (FR); HERNANDEZ, Antoine, F-92290 Chatenay Malabry (FR); MARTY, Pascal, F-94360 Bry-sur-Marne (FR); POLSTER, Bernd, 60431 Frankfurt Am Main (DE)
(74) Mandataire: Mercey, Fiona Susan
(86) Numéro de dépôt international: PCT/FR2009/051438
(87) Numéro de publication internationale: WO 2010/015764

(56) Documents cités:
- WO-A-2007/018505
- WO-A1-2007/018518
- DE-A1- 3 741 906
- US-A1- 2005 047 995
- US-A1- 2005 232 854
- US-A1- 2007 056 319
- US-A1- 2007 245 630
- US-B1- 6 578 377
- BERNINGER R: "FORTSCHRITTE BEI DER H2/CO-TIEFTEMPERATURZERLEGUNG//PROGRESS IN H2/CO LOW TEMPERATURE SEPARATION", BERICHTE AUS TECHNIK UND WISSENSCHAFT, LINDE AG. WIESBADEN, DE, vol. 62, 1 janvier 1988 (1988-01-01), pages 18-32, XP009045782, ISSN: 0942-332X

## Description

La présente invention concerne un procédé et un appareil de génération et de séparation d'un mélange d'hydrogène et de monoxyde de carbone, conformément aux préambules des revendications 1 et 10 respectivement et connu du document DE-A-3741906.

Les unités de production de monoxyde de carbone et d'hydrogène peuvent être séparées en deux parties :
- genération du gaz de synthèse (mélange contenant H₂, CO, CH₄, CO₂, Ar, H₂O et N₂ essentiellement). Parmi les diverses voies industrielles de production de gaz de synthèse, celles à base d'oxydation partielle de gaz naturel, de reformage auto-thermique ou de gazéification de charbon peuvent s'avérer intéressantes quand le rapport de production H₂/CO est faible (inférieur à 3 environ).
- purification du gaz de synthèse. On retrouve :
   * une unité de lavage à un solvant liquide pour éliminer la plus grande partie des gaz acides contenue dans le gaz de synthèse,
   * une unité d'épuration sur lit d'adsorbants,
   * une unité de séparation par voie cryogénique dite boîte froide pour la production de CO.

Dans le cas d'un gaz de synthèse issu d'un réacteur d'oxydation partielle, d'un réacteur auto thermique ou de gazéification de charbon ou de charges d'hydrocarbures lourdes, la teneur en méthane résiduelle dans le gaz de synthèse à l'entrée de la boîte froide est trop faible pour un procédé de type lavage au méthane, les teneurs en CH₄ peuvent être de l'ordre de 0.1% dans le cas d'une gazéification de charbon ou bien de l'ordre de 0.9% dans le cas de réacteur d'oxydation partielle ou auto-thermique, alors que la teneur minimale à l'entrée de la boite froide est généralement autour de 2%. Dans ce cas, le procédé cryogénique classique de purification d'un gaz de synthèse (Boîte froide CO) est une condensation partielle.

Tous les pourcentages dans ce document sont des pourcentages molaire.

Dans le cadre d'une production combinée de CO et d'hydrogène pur sous pression, le procédé condensation partielle a des désavantages par rapport au lavage au méthane:
- la condensation partielle ne permet pas de produire de l'hydrogène pur avec une faible teneur en CO sans PSA (par exemple l'hydrogène contient environ 10 ppm CO quand produit par lavage au méthane, alors qu'il contient de 2 à 15% CO quand produit par condensation partielle) ;
- le rendement CO de la condensation partielle est plus faible ; pour augmenter le rendement de la condensation partielle il faut investir dans un compresseur de recycle des gaz résiduaires de la condensation partielle ;
- le méthane contenu dans le gaz de synthèse ne se retrouve qu'en partie dans la purge de méthane en fond de cuve de la colonne CO/CH₄. Une quantité important de méthane sort de la boîte froide avec le gaz riche en hydrogène en tête de la colonne de lavage par équilibre thermodynamique au niveau de température de la tête de la colonne de lavage, une autre quantité sortant avec le gaz de flash prélevé en tête de colonne d'épuisement par équilibre thermodynamique au niveau de température de la tête de la conne d'épuisement. Afin d'assurer un bilan de matière positif du système en CH₄, il faut que la quantité de CH₄ qui rentre dans la boîte froide avec le gaz de synthèse soit supérieure à la somme des quantités de CH₄ qui partent avec le gaz riche en hydrogène et le gaz de flash afin d'assurer une purge CH₄ qui permette de contrôler le système.

Les faibles traces de CO₂ en sortie de l'épuration (0.3 ppm) se retrouvent dissoutes dans le liquide de cuve de la colonne CO/CH₄. Afin d'éviter toute accumulation de CO₂ dans le système (dans la boucle de lavage), il faut que la totalité du CO₂ qui rentre dans la boîte froide sorte par la purge CH₄.

Généralement la purge de CH₄ et le circuit de lavage sont prélevés ensemble en fond de cuve de la colonne CO/CH₄. La teneur en CO₂ dans la purge est donc la même que dans le circuit de lavage. Le circuit de lavage étant sous-refroidi à -180°C afin d'optimiser le lavage la teneur en CO₂ dans le circuit de lavage, donc dans la purge, doit être inférieure à la valeur de la solubilité du CO₂ dans le CH₄ à -180°C pour éviter de solidifier le CO₂ dans ce circuit dans les passages de l'échangeur.

En considérant une teneur en CO₂ sortie épuration de 0.3 ppm et une valeur de solubilité du CO₂ dans le CH₄ à -180°C de 42 ppm, cela définit un taux de concentration et CO₂ exprimé par le rapport entre le débit de gaz de synthèse entrant la boîte froide et la purge CH₄ maximum de 140.

Ceci définit, pour un débit de gaz de synthèse donné, une valeur de teneur en CH₄ à l'entrée de la boîte froide minimale afin d'assurer, à la fois, un bilan en CH₄ excédentaire et une purge CH₄ pour contrôler le système et limiter le taux de concentration en CO₂ afin d'éviter de solidifier le CO₂ dans le circuit de CH₄ de lavage et donc éviter de boucher l'échangeur cryogénique.

Afin de bénéficier, pour un procédé de génération de gaz de synthèse par réacteur d'oxydation partielle, auto-thermique ou bien de gazéification de charbon ou de charges lourdes, des avantages du procédé de type lavage au méthane, l'idée est d'augmenter la teneur en CH₄ dans le gaz de synthèse à l'entrée de la boîte froide, par exemple pour obtenir une teneur en méthane d'au moins 1.8% et de préférence d'au moins 2% et encore plus avantageusement de 2.3%, etc.

Il est parfois possible d'opérer un procédé de lavage de méthane avec un gaz d'alimentation contenant au moins 1,8% de méthane, généralement possible avec un gaz d'alimentation contenant au moins 2% et de toutes façons possible avec un gaz d'alimentation contenant au moins 2,3% de méthane.

DE-A-3741906 décrit un procédé de séparation d'un gaz de synthèse peu riche en méthane par lavage au méthane, le liquide de cuve de la colonne de lavage étant enrichi en méthane par rajout d'un gaz étranger au procédé de séparation et contenant du méthane.

Il est bien évidemment possible d'enrichir un gaz de synthèse contenant au plus 1,8% de méthane pour obtenir un gaz contenant au moins 2%, voire 2,3 de méthane, comme il est possible un gaz de synthèse contenant au plus 2% de méthane pour obtenir un gaz contenant au moins 2,3 de méthane, selon l'invention.

Il s'agit également d'apporter des solutions pour traiter les C2+ qui pourraient être présents dans le gaz de synthèse.

Selon un objet de l'invention, il est prévu un procédé de génération et de séparation de gaz de synthèse dans lequel on génère un gaz de synthèse à partir d'un gaz de charge, riche en méthane, par exemple du gaz naturel, on épure le gaz de synthèse contenant de l'hydrogène et du monoxyde de carbone par au moins un procédé de traitement pour produire un gaz de synthèse épuré et on sépare le gaz de synthèse par distillation cryogénique dans une installation comprenant au moins une colonne de lavage du méthane pour produire un gaz enrichi en hydrogène et/ou un gaz enrichi en monoxyde de carbone, le gaz de synthèse généré contenant moins de 2,3% de méthane, de préférence moins de 2% de méthane, voire moins de 1,8% de méthane et l'on enrichit le gaz de synthèse en amont de la séparation par distillation cryogénique en envoyant une partie du gaz de charge à un procédé de traitement en aval de l'étape de génération de gaz de synthèse, sans passer par l'étape de génération de gaz de synthèse, pour obtenir un gaz de synthèse comprenant plus de 2,3% de méthane si le gaz de synthèse généré contient moins que 2,3% de méthane ou plus de 2% de méthane si le gaz de synthèse généré contient moins que 2% de méthane ou plus de 1,8 % de méthane si le gaz de synthèse généré contient moins que 1,8 % de méthane.

Selon d'autres aspects facultatifs :
- le gaz de charge envoyé au procédé de traitement en aval de l'étape de génération peut provenir d'un pré-réformeur en amont de l'étape de génération et/ou d'une unité d'hydrodésulfuration en amont de l'étape de génération ;
- on envoie un gaz riche en méthane, provenant éventuellement d'une source externe, en aval de l'étape de génération de gaz de synthèse et en amont de l'étape de séparation par distillation cryogénique ;
- on envoie le gaz riche en méthane à un procédé de traitement en amont de l'étape de séparation par distillation cryogénique ;
- on envoie un débit enrichi en méthane provenant du procédé de distillation cryogénique, éventuellement après pressurisation, en aval de l'étape de génération de gaz de synthèse ;
- on envoie un débit enrichi en méthane provenant du procédé de distillation cryogénique à un procédé de traitement du gaz de synthèse.
- les procédés de traitement du gaz de synthèse comprennent au moins un des procédés suivants : élimination de gaz acides, séchage, adsorption de dioxyde de carbone ;
- on soutire un fluide riche en méthane quelques plateaux théoriques au-dessus de la cuve d'une colonne CO/CH₄ éventuellement pour servir de gaz riche en méthane à envoyer éventuellement après pressurisation, en aval de l'étape de génération de gaz de synthèse et on soutire un liquide de cuve de la colonne CO/CH₄ pour servir de purge ;
- on soutire un fluide riche en méthane quelques plateaux théoriques au-dessus de la cuve d'une colonne CO/CH₄ éventuellement pour servir de lavage en tête de colonne de lavage au méthane et on soutire un liquide de cuve de la colonne CO/CH₄ pour servir de purge ;
- le liquide de purge est mélangé à un liquide riche en hydrocarbures lourds obtenu par séparation du gaz de synthèse dans l'installation de distillation cryogénique ;

Selon un autre objet de l'invention, il est prévu un appareil de génération et de séparation de gaz de synthèse comprenant une unité de génération d'un gaz de synthèse à partir d'un gaz de charge, une unité d'épuration de gaz de synthèse contenan de l'hydrogène et du monoxyde de carbone par au moins un procédé de traitement pour produire un gaz de synthèse épuré et une unité de séparation de le gaz de synthèse par distillation cryogénique comprenant au moins une colonne de lavage du méthane pour produire un gaz enrichi en hydrogène et/ou un gaz enrichi en monoxyde de carbone, l'unité de génération de gaz de synthèse étant adapté pour générer un gaz de synthèse contenant moins de 2,3% de méthane, de préférence moins de 2% de méthane, voire moins de 1,8% de méthane et en ce qu'il comprend des moyens d'enrichissement du gaz de synthèse en amont de l'unité séparation par distillation cryogénique pour obtenir un gaz de synthèse comprenant plus de 2,3% si le gaz de synthèse généré contient moins que 2,3% de méthane ou plus de 2% si le gaz de synthèse généré contient moins que 2% de méthane ou plus de 1,8 % si le gaz de synthèse généré contient moins que 1,8 % de méthane, les moyens d'enrichissement comprenant des moyens d'envoi d'une partie du gaz de charge à un procédé de traitement en aval de l'étape de génération de gaz de synthèse, sans passer par l'étape de génération de gaz de synthèse.

Selon d'autres aspects facultatifs, l'appareil comprend :
- des moyens pour envoyer la partie du gaz de charge pris en aval d'un pré-réformeur en amont de l'étape de génération ;
- des moyens pour envoyer la partie du gaz de charge pris en aval d'une unité d'hydrodésulfuration en amont de l'étape de génération ;
- des moyens d'envoi d'un gaz riche en méthane, provenant éventuellement d'une source externe, en aval de l'étape de génération de gaz de synthèse et en amont de l'étape de séparation par distillation cryogénique ;
- des moyens d'envoi d'un débit enrichi en méthane provenant du procédé de distillation cryogénique à un procédé de traitement du gaz de synthèse ;
- des moyens d'envoi du gaz riche en méthane à un procédé de traitement en amont de l'étape de séparation par distillation cryogénique ;
- des moyens d'envoi d'un débit enrichi en méthane provenant du procédé de distillation cryogénique, éventuellement après pressurisation, en aval de l'étape de génération de gaz de synthèse ;
- les unités de traitement du gaz de synthèse comprennent au moins une des unités suivantes : unité d'élimination de gaz acides, unité de séchage, unité d'adsorption de dioxyde de carbone ;
- des moyens de soutirage d'un fluide riche en méthane quelques plateaux théoriques au-dessus de la cuve d'une colonne CO/CH₄ éventuellement pour servir de gaz riche en méthane à envoyer éventuellement après pressurisation, en aval de l'étape de génération de gaz de synthèse et des moyens de soutirage d'un liquide de cuve de la colonne CO/CH₄ pour servir de purge ;
- des moyens de soutirage d'un fluide riche en méthane quelques plateaux théoriques
   au-dessus de la cuve d'une colonne CO/CH₄ éventuellement pour servir de lavage en tête de colonne de lavage au méthane et des moyens de soutirage d'un liquide de cuve de la colonne CO/CH₄ pour servir de purge ;
- des moyens de mélanger le liquide de purge à un liquide riche en hydrocarbures lourds obtenu par séparation du gaz de synthèse dans l'installation de distillation cryogénique ;
- des moyens pour envoyer une partie du gaz de charge à une unité d'élimination d'acides en aval de l'étape de génération, sans passer par l'unité de génération de gaz de synthèse ;
- des moyens pour envoyer une partie du gaz de charge à une unité d'adsorption en aval de l'étape de génération, sans passer par l'unité de génération de gaz de synthèse.

La solution selon l'invention est l'injection d'un flux riche en CH₄, constitué par une partie du gaz de charge qui n'as pas été envoyé au réacteur, dans le gaz de synthèse après le réacteur de génération du gaz de synthèse et avant la colonne de lavage au méthane de la boîte froide.

### Exemples

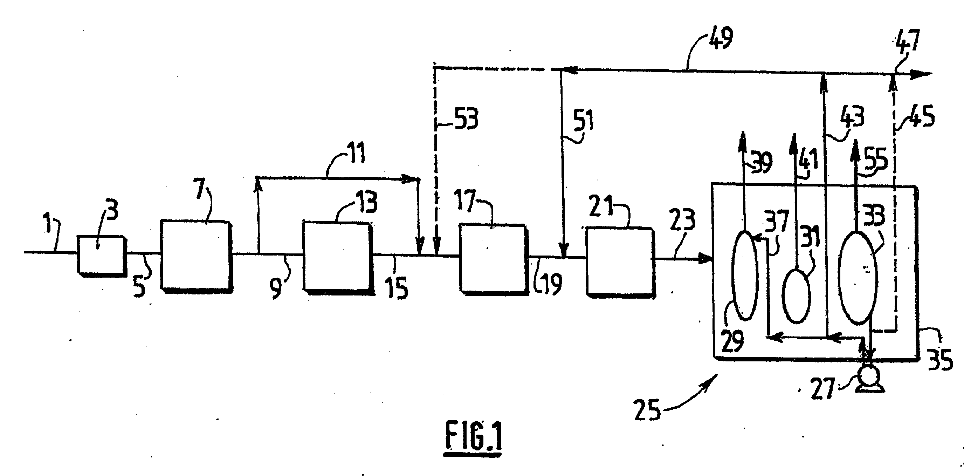

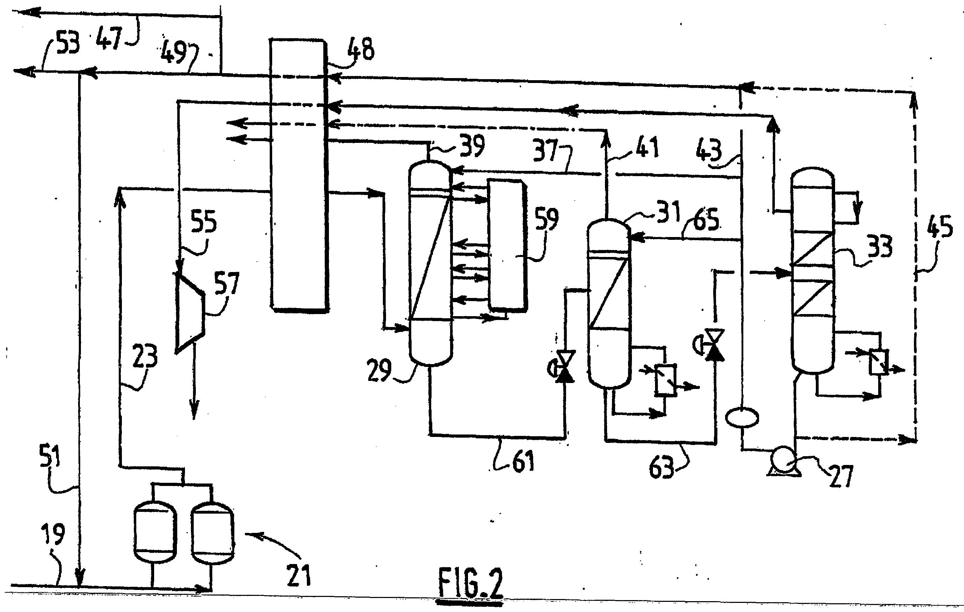

### 1. Recyclage du CH₄ avant la boîte froide (Figures 1 et 2) :

Selon un aspect facultatif, le recyclage du CH₄ est applicable dans le cas où la teneur en CH₄ dans le gaz de synthèse (avant ce recyclage CH₄) permet un bilan positif de CH₄ dans la boîte froide, mais présente un taux de CO₂ trop important. Pour abaisser le taux de concentration en CO₂, on prévoit :
1. L'augmentation de la pression de refoulement des pompes de CH₄ et de recycle CH₄ entre la boîte froide et l'amont de la dessiccation afin de limiter le taux de concentration en CO₂ dans le soutirage de cuve de la colonne CO/CH₄.
2. Le refroidissement de la tête de la colonne de lavage pour diminuer la teneur en CH₄ pour le gaz riche en hydrogène.

### 2. Pré-reformeur avec POX, ATR, SMR (Figure 1):

Par court-circuitage du réacteur entre la sortie du pré-réformeur et la sortie du réacteur (afin de réduire la teneur en C2+ dans le gaz de synthèse à l'entrée de la boîte froide, (tous les C2+ du gaz naturel alimentant le pré-réformeur étant transformés en CH₄ dans le pré-réformeur), on assure un bilan de matière positif dans le procédé de lavage au méthane, une partie de la charge en sortie pré-reformer étant directement injectée en aval du réacteur.
1. L'augmentation de la pression de refoulement des pompes de CH₄ et de recycle de CH₄ entre la boîte froide et l'amont de la dessiccation permet de limiter le taux de concentration en CO₂ dans le soutirage de cuve de la colonne CO/CH₄.
2. Le refroidissement de la tête de la colonne de lavage permet de diminuer la teneur en CH₄ dans le gaz riche en hydrogène.

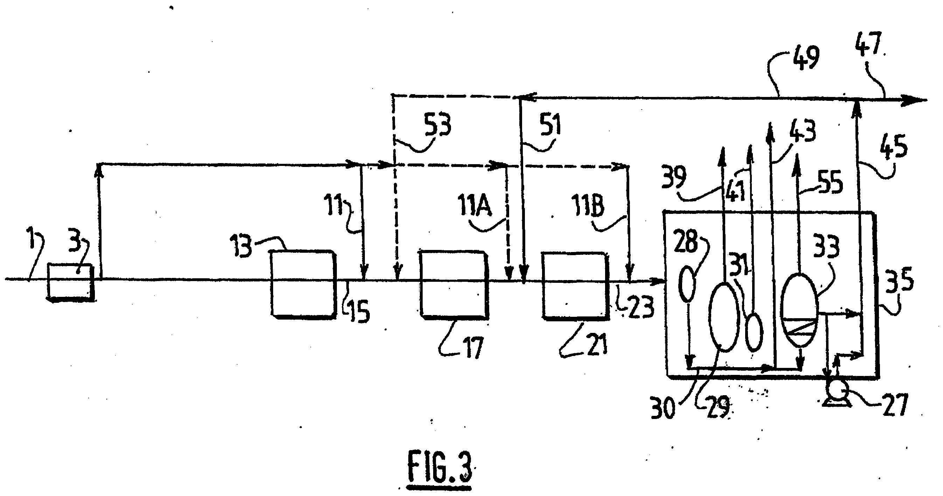

### 3. Réacteur sans pré-réformeur (POX, ATR, SMR) et avec HDS (Figure 3) :

Par court-circuitage du réacteur entre la sortie de l'unité de hydro désulfuration (HDS) et la sortie du réacteur pour assurer un bilan de matière positif dans le procédé lavage au méthane, une partie de la charge en sortie de la HDS est directement injectée en aval du réacteur.

Il y a injection du fluide court-circuité après le réacteur et avant la colonne de lavage
a) si le fluide court-circuité contient du CO₂, on prévoit l'injection de ce fluide entre la sortie du réacteur et avant l'élimination gaz acides)
b) si le fluide court-circuité contient une très faible quantité de CO₂ (<50 vpm), on prévoit l'injection de ce fluide entre la sortie du réacteur et avant les adsorbeurs de la dessiccation
c) si le fluide court-circuité ne contient pas du tout de CO₂ ni d'H₂O, on prévoit l'injection de ce fluide entre la sortie du réacteur et avant la colonne de lavage au méthane. Cette dernière alternative ne fait pas l'objet de la présente invetion.

L'augmentation de la pression de refoulement des pompes CH₄ et de recycle CH₄ entre la boîte froide et l'amont de la dessiccation permet de limiter le taux de concentration en CO₂ dans la purge CH₄.

Un pot de séparation diphasique dans la boîte froide à un niveau de température d'environ -145°C élimine les C3+ et évite qu'ils se solidifient lorsque le gaz de synthèse est refroidi à des niveaux de température plus froides dans la ligne d'échange.

L'ajout d'une section supplémentaire en cuve de la colonne de distillation CO/CH₄ est parfois nécessaire. La purge CH₄ est soutirée en cuve de colonne et contient le C₂.

Le soutirage en tête de cette section de cuve du débit de lavage au CH₄ et du recycle de CH₄ est utilisé (contenant peu de C2, une forte teneur en C2 dans le circuit de lavage pouvant provoquer des phénomènes de moussage ou autres et conduire à un mauvais fonctionnement de la colonne de lavage).

Le refroidissement de la tête de la colonne de lavage permet de diminuer la teneur en CH₄ dans le gaz riche en hydrogène.

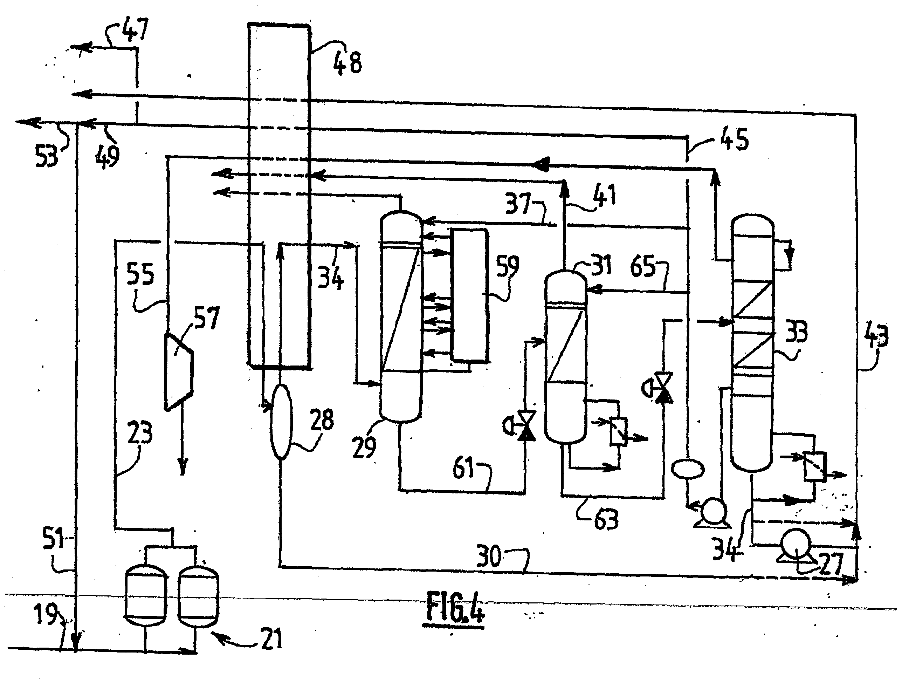

Les procédés et appareils selon l'invention seront décrits en plus de détail en se référant aux figures dans lesquels les Figures 1 et 3, représentent un procédé de génération et de séparation d'un mélange de monoxyde de carbone et d'hydrogène selon l'invention et les Figures 2 et 4 montrent le détail du procédé de séparation d'un mélange de monoxyde de carbone et d'hydrogène, adapté à y être incorporé.

La Figure 1 montre un procédé dans lequel un gaz de charge 1 riche en méthane, tel que le gaz naturel, est envoyé à une unité de hydrodésulfuration (HDS) 3, tel que décrite dans « Desulphurisation » de Kyte, IChemE, 1995.

Le gaz produit 5 est envoyé à un pré-réformeur 7. A la sortie du pré-réformeur, le gaz est constitué essentiellement de CH₄, les C2+ sont transformés en CH₄ et le CH₄ ne se transforme que très peu en gaz de synthèse.

Le gaz sortant du préreformeur est séparé pour former un débit de court-circuitage 11 et un débit 9. Le débit 9 est envoyé au réacteur 13 du type SMR, ATR etc. pour produire un gaz de synthèse 15 contenant moins de 2,3% de méthane, de préférence moins de 2% de méthane, voire moins de 1,8% de méthane auquel est mélangé le débit de court-circuitage 11. Le mélange est envoyé à l'unité d'élimination de gaz acides 17 pour produire un gaz épuré 19. Le gaz épuré 19 est envoyé à une unité d'adsorption 21 pour être séché et épuré en CO₂ pour former un gaz 23. Le gaz 23 est refroidi et envoyé à une unité de distillation cryogénique 35 opérant par lavage au méthane. Cette unité est illustrée en plus de détail dans la Figure 2. Elle comprend une colonne de lavage au méthane 29, une colonne d'épuisement 31 et une colonne de séparation CO/CH₄ 33 à l'intérieur d'une boîte froide 35. Du méthane liquide est soutiré en cuve de la colonne CO/CH₄ 33, vaporisé, éventuellement après pompage par la pompe 27, et sorti de la boîte froide comme débit 43 et/ou 45. La pompe 27 peut également servir à envoyer du méthane 37 à la colonne de lavage au méthane 29.

Une partie 47 du méthane peut servir de purge et le reste 49 peut être recyclé, éventuellement après compression en amont ou en aval de l'unité d'élimination de gaz acides comme débit 51 ou 53.

De cette façon le contenu en méthane du débit 15 à l'arrivée dans l'unité de élimination 17 monte à au moins 1,8% de méthane, de préférence au moins 2%, voire 2,3% de méthane.

Des gaz riches en hydrogène 39, 41 sont produits par les colonnes de lavage 29 e d'épuisement 31.

Dans la Figure 2, le gaz épuré 19 est envoyé à l'unité d'adsorption 21 de la Figure 1 pour être séché et épuré en CO₂ pour former un gaz 23. Le gaz 23 est refroidi et envoyé à une unité de distillation cryogénique 35 opérant par lavage au méthane. Elle comprend une colonne de lavage au méthane 29, une colonne d'épuisement 31 et une colonne de séparation CO/CH₄ 33 à l'intérieur d'une boîte froide. Le gaz 23 se refroidit dans l'échangeur 48 et es envoyé en cuve de la colonne de lavage au méthane 29. Le liquide de cuve 61 de cette colonne 29 est envoyé à la colonne d'épuisement 31 et le liquide de cuve 63 de la colonne d'épuisement est envoyé à un point intermédiaire de la colonne CO/CH₄ 33. Du méthane liquide est soutiré en cuve de la colonne CO/CH₄ 33, vaporisé dans l'échangeur 48, éventuellement après pompage par la pompe 27, et sorti de la boîte froide comme débit 49. La pompe 27 peut également servir à envoyer du méthane 37 à la colonne de lavage au méthane 29 et du méthane 65 à la tête de la colonne d'épuisement 31.

Le débit 49 est recyclé, éventuellement après compression en amont ou en aval de l'unité d'élimination de gaz acides comme débit 51 ou 53.

Des gaz riches en hydrogène 39, 41 sont produits par les colonnes de lavage 29 et d'épuisement 31.

Un gaz ou un liquide 55 riche en monoxyde de carbone est soutiré en tête de la colonne CO/CH₄, chauffé (et éventuellement vaporisé) dans l'échangeur 48 et éventuellement comprimé dans un compresseur 57 pour former le produit.

La Figure 3 montre un procédé dans lequel le gaz de synthèse est produit par un réacteur 13 de type_POX, ATR, SMR sans pré-reformeur et avec HDS dans lequel un gaz de charge 1 riche en méthane, pouvant être du gaz naturel, est envoyé à une unité de hydrodésulfuration 3. Le gaz produit est divisé en deux, une partie 5 étant envoyée à un réacteur 13. Le reste du gaz forme un débit de court-circuitage. Le réacteur 13 produit un gaz de synthèse 15 contenant moins de 2,3% de méthane, de préférence moins de 2% de méthane, voire moins de 1,8% de méthane auquel est mélangé le débit de court-circuitage 11, si ce débit contient du CO₂. Le mélange est envoyé à l'unité d'élimination de gaz acides 17 pour produire un gaz épuré 19. Le débit de court-circuitage 11A peut y être mélangé s'il contient moins que 50 vpm de CO₂. Le gaz épuré 19 est envoyé à une unité d'adsorption 21 pour être séché et épuré en CO₂ pour former un gaz 23. Le débit de court-circuitage 11B peut y être mélangé s'il ne contient pas du tout de CO₂. Le gaz 23 est refroidi et envoyé à une unité de distillation cryogénique 35 opérant par lavage au méthane. Cette unité est illustrée en plus de détail dans la Figure 2. Elle comprend un pot de séparation 28 pour éliminer les C3+, une colonne de lavage au méthane 29, une colonne d'épuisement 31 et une colonne de séparation CO/CH₄ 33 à l'intérieur d'une boîte froide 35. Du méthane liquide est soutiré quelques étages au-dessus de la cuve de la colonne CO/CH₄ 33, vaporisé, éventuellement après pompage par la pompe 27, et sorti de la boîte froide comme débit 45. La pompe 27 peut également servir à envoyer du méthane 37 à la colonne de lavage au méthane 29.

Une partie 47 du méthane peut servir de purge et le reste 49 peut être recyclé éventuellement après compression en amont ou en aval de l'unité d'élimination de gaz acides comme débit 51 ou 53. De cette façon le contenu en méthane du débit 15 à l'arrivée dans l'unité de élimination 17 monte à au moins 1,8% de méthane, de préférence au moins 2%, voire 2,3% de méthane.

Des gaz riches en hydrogène 39, 41 sont produits par les colonnes de lavage 29 et d'épuisement 31. Un fluide riche en méthane contenant des C2 est soutiré de la cuve de la colonne CO/CH₄ 33, mélangé au fluide riche en C3+ 30 provenant du pot 28 et le mélange 43 est sorti de la boîte froide.

Dans la Figure 4, le gaz épuré 19 est envoyé à l'unité d'adsorption 21 de la Figure 3 pour être séché et épuré en CO₂ pour former un gaz 23. Le gaz 23 est refroidi et envoyé à une unité de distillation cryogénique 25 opérant par lavage au méthane. Elle comprend une colonne de lavage au méthane 29, une colonne d'épuisement 31 et une colonne de séparation CO/CH₄ 33 à l'intérieur d'une boîte froide. Le gaz 23 se refroidit dans partiellement dans l'échangeur 48 et est envoyé à un pot séparateur 28. Le gaz produit 34 est envoyé en cuve de la colonne de lavage au méthane 29. Le liquide de cuve 61 de cette colonne 29 est envoyé à la colonne d'épuisement 31 et le liquide de cuve 63 de la colonne d'épuisement est envoyé à un point intermédiaire de la colonne CO/CH₄ 33. Du méthane liquide est soutiré quelques étages au-dessus de la cuve de la colonne CO/CH₄ 33, vaporisé dans l'échangeur 48, éventuellement après pompage par la pompe 27, et sorti de la boîte froide comme débit 49. La pompe 27 peut également servir à envoyer du méthane 37 à la colonne de lavage au méthane 29 et du méthane 65 à la tête de la colonne d'épuisement 31.

Le fluide 34, qui est le méthane de cuve de la colonne 33 peut être pompé par la pompe 27 avant d'être mélangé au liquide 30 provenant du pot 28 et le mélange 43 est envoyé à l'échangeur 48 et peut servir ultérieurement de carburant.

Une partie du débit 49 est recyclée, éventuellement après compression en amont ou en aval de l'unité d'élimination de gaz acides comme débit 51 ou 53. Eventuellement une partie du méthane constitué par le fluide 47 peut servir comme carburant.

Un gaz ou un liquide 55 riche en monoxyde de carbone est soutiré en tête de la colonne CO/CH₄, chauffé (et éventuellement vaporisé) dans l'échangeur 48 et éventuellement comprimé dans un compresseur 57 pour former le produit

Des gaz riches en hydrogène 39, 41 sont produits par les colonnes de lavage 29 et d'épuisement 31.

## Revendications

1. Procédé de génération et de séparation de gaz de synthèse dans lequel on génère un gaz de synthèse (15) à partir d'un gaz de charge, et on sépare le gaz de synthèse par distillation cryogénique dans une installation (25) comprenant au moins une colonne de lavage du méthane (29) pour produire un gaz enrichi en hydrogène et/ou un gaz enrichi en monoxyde de carbone, le gaz de synthèse généré (15) contenant moins de 2,3% de méthane, de préférence moins de 2% de méthane, voire moins de 1,8% de méthane **caractérisé en ce que** l'on enrichit le gaz de synthèse en amont de la séparation par distillation cryogénique, en envoyant une partie (11, 11A) du gaz de charge à un procédé de traitement en aval de l'étape de génération de gaz de synthèse, sans passer par l'étape de génération de gaz de synthèse, pour obtenir un gaz de synthèse comprenant plus de 2,3% de méthane si le gaz de synthèse généré contient moins que 2,3% de méthane ou plus de 2% de méthane si le gaz de synthèse généré contient moins que 2% de méthane ou plus de 1,8 % de méthane si le gaz de synthèse généré contient moins que 1,8% de méthane, le gaz de charge étant riche en méthane et on épure le gaz de synthèse contenant de l'hydrogène et du monoxyde de carbone par le procédé de traitement pour produire un gaz de synthèse épuré.

2. Procédé selon la revendication 1 dans lequel on envoie le gaz riche en méthane (51, 53), provenant éventuellement d'une source externe, en aval de l'étape de génération de gaz de synthèse et en amont de l'étape de séparation par distillation cryogénique.

3. Procédé selon la revendication 2 dans lequel on envoie le gaz riche en méthane(51, 53), à un procédé de traitement en amont de l'étape de séparation par distillation cryogénique.

4. Procédé selon l'une des revendications précédentes dans lequel les procédés de traitement du gaz de synthèse comprennent au moins un des procédés suivants : élimination de gaz acides, séchage, adsorption de dioxyde de carbone.

5. Procédé selon l'une des revendications précédentes dans lequel on soutire un fluide riche en méthane (43, 51) quelques plateaux théoriques au-dessus de la cuve d'une colonne CO/CH₄ (33) éventuellement pour servir de gaz riche en méthane à envoyer éventuellement après pressurisation, en aval de l'étape de génération de gaz de synthèse et on soutire un liquide de cuve (34) de la colonne CO/CH₄ pour servir de purge.

6. Procédé selon l'une des revendications précédentes dans lequel on soutire un fluide riche en méthane (37) quelques plateaux théoriques au-dessus de la cuve d'une colonne CO/CH₄ éventuellement pour servir de lavage en tête de colonne de lavage au méthane et on soutire un liquide de cuve de la colonne CO/CH₄ pour servir de purge.

7. Procédé selon la revendication 6 dans lequel le liquide de purge (34) est mélangé à un liquide (30) riche en hydrocarbures lourds obtenu par séparation du gaz de synthèse dans l'installation de distillation cryogénique.

8. Procédé selon l'une des revendications précédentes dans lequel la partie (11, 11A) du gaz de charge envoyé au procédé de traitement en aval de l'étape de génération, sans passer par l'étape de génération de gaz de synthèse, provient d'un pré-réformeur (7) en amont de l'étape de génération.

9. Procédé selon l'une des revendications précédentes dans lequel la partie (11, 11A) du gaz de charge envoyé au procédé de traitement en aval de l'étape de génération, sans passer par l'étape de génération de gaz de synthèse, provient d'une unité d'hydrodésulfuration (3) en amont de l'étape de génération

10. Appareil de génération et de séparation de gaz de synthèse comprenant une unité de génération d'un gaz de synthèse à partir d'un gaz de charge, par exemple du gaz naturel, une unité de séparation du gaz de synthèse par distillation cryogénique comprenant au moins une colonne de lavage du méthane pour produire un gaz enrichi en hydrogène et/ou un gaz enrichi en monoxyde de carbone, l'unité de génération de gaz de synthèse étant adapté pour générer un gaz de synthèse contenant moins de 2,3% de méthane, de préférence moins de 2% de méthane, voire moins de 1,8% de méthane et en ce qu'il comprend des moyens d'enrichissement du gaz de synthèse en amont de l'unité de séparation par distillation cryogénique capable d'obtenir un gaz de synthèse comprenant plus de 2,3% si le gaz de synthèse généré contient moins que 2,3% de méthane ou plus de 2% si le gaz de synthèse généré contient moins que 2% de méthane ou plus de 1,8 % si le gaz de synthèse généré contient moins que 1,8 % de méthane **caractérisé en ce que** ces moyens d'enrichissement sont constitués par des moyens d'envoi d'une partie (11, 11A) du gaz de charge riche en méthane à un procédé de traitement en aval de l'unité de génération de gaz de synthèse, sans passer par l'unité de génération de gaz de synthèse et **en ce qu'**il comprend une unité d'épuration de gaz de synthèse contenant de l'hydrogène et du monoxyde de carbone pour effectuer le procédé de traitement pour produire un gaz de synthèse épuré.

11. Appareil selon la revendication 10 dans lequel les moyens pour envoyer la partie (11, 11A) du gaz de charge au procédé de traitement en aval de l'étape de génération, sans passer par l'unité de génération de gaz de synthèse, sont reliés à un pré-réformeur (7) en amont de l'unité de génération (13).

12. Appareil selon la revendication 10 ou 11 dans lequel les moyens pour envoyer une partie (11, 11A) du gaz de charge au procédé de traitement en aval de l'étape de génération, sans passer par l'unité de génération de gaz de synthèse, sont reliés à une unité d'hydrodésulfuration (3) en amont de l'unité de génération (13).

13. Appareil selon l'une des revendications 10 à 12 comprenant des moyens pour envoyer la partie du gaz de charge à une unité d'élimination d'acides (17) en aval de l'unité de génération (13), sans passer par l'unité de génération de gaz de synthèse.

14. Appareil selon l'une des revendications 10 à 13 comprenant des moyens pour envoyer la partie du gaz de charge à une unité d'adsorption (21) en aval de l'unité de génération (13), ou directement à l'unité de séparation (35), sans passer par l'unité de génération de gaz de synthèse.

## Patentansprüche

1. Verfahren zum Erzeugen und Trennen von Synthesegas, wobei man ein Synthesegas (15) aus einem Ladegas erzeugt, und man das Synthesegas durch kryogene Destillation in einer Installation (25) trennt, die mindestens eine Methanwaschsäule (29) zum Produzieren eines mit Wasserstoff angereicherten Gases und/oder eines mit Kohlenmonoxid angereicherten Gases umfasst, wobei das erzeugte Synthesegas (15) weniger als 2,3% an Methan, vorzugsweise weniger als 2% an Methan, oder gar weniger als 1,8% an Methan enthält, **dadurch gekennzeichnet, dass** man das Synthesegas stromaufwärts der Trennung durch kryogene Destillation anreichert, indem man einen Teil (11, 11A) des Ladegases zu einem Behandlungsverfahren stromabwärts des Schrittes zum Erzeugen von Synthesegas schickt, ohne den Schritt zum Erzeugen von Synthesegas zu durchlaufen, um ein Synthesegas zu erhalten, das mehr als 2,3% an Methan umfasst, wenn das erzeugte Synthesegas weniger als 2,3% an Methan enthält oder mehr als 2% an Methan, wenn das erzeugte Synthesegas weniger als 2% an Methan enthält, oder mehr als 1,8% an Methan, wenn das erzeugte Synthesegas weniger als 1,8% an Methan enthält, wobei das Ladegas methanreich ist und man das Synthesegas, das Wasserstoff und Kohlenmonoxid enthält, durch das Behandlungsverfahren reinigt, um ein gereinigtes Synthesegas zu produzieren.

2. Verfahren nach Anspruch 1, wobei man das methanreiche Gas (51, 53), das eventuell aus einer externen Quelle stammt, stromabwärts des Schrittes zum Erzeugen von Synthesegas und stromaufwärts des Schrittes zum Trennen durch kryogene Destillation schickt.

3. Verfahren nach Anspruch 2, wobei man das methanreiche Gas (51, 53) zu einem Behandlungsverfahren stromaufwärts des Schrittes zum Trennen durch kryogene Destillation schickt.

4. Verfahren nach einem der vorstehenden Ansprüche, wobei die Behandlungsverfahren des Synthesegases mindestens eines der folgenden Verfahren umfassen:
Eliminieren von sauren Gasen, Trocknen, Adsorption von Kohlendioxid.

5. Verfahren nach einem der vorstehenden Ansprüche, wobei man ein methanreiches Fluid (43, 51) einige theoretische Ebenen oberhalb des Sumpfes einer CO/CH₄ Säule (33) entzieht, eventuell, um als methanreiches Gas zu dienen, das eventuell nach der Druckbeaufschlagung stromabwärts des Schrittes zum Erzeugen von Synthesegas zu schicken ist, und man eine Sumpfflüssigkeit (34) aus der CO/CH₄ Säule entzieht, um als Spülausgang zu dienen.

6. Verfahren nach einem der vorstehenden Ansprüche, wobei man ein methanreiches Fluid (37) einige theoretische Ebenen oberhalb des Sumpfes einer CO/CH₄ Säule entzieht, eventuell, um zum Waschen am Kopf der Methanwaschsäule zu dienen, und man eine Sumpfflüssigkeit aus der CO/CH₄ Säule entzieht, um als Spülausgang zu dienen.

7. Verfahren nach Anspruch 6, wobei die Spülausgangsflüssigkeit (34) mit einer Flüssigkeit (30) gemischt wird, die reich an schweren Kohlenwasserstoffen ist, die man durch Trennen des Synthesegases in der kryogenen Destillationsinstallation erhalten hat.

8. Verfahren nach einem der vorstehenden Ansprüche, wobei der Teil (11, 11A) des Ladegases, der zum Behandlungsverfahren stromabwärts des Schrittes zum Erzeugen geschickt wird, ohne den Schritt zum Erzeugen von Synthesegas zu durchlaufen, aus einem Vorreformer (7) stromaufwärts des Schrittes zum Erzeugen stammt.

9. Verfahren nach einem der vorstehenden Ansprüche, wobei der Teil (11, 11A) des Ladegases, der zum Behandlungsverfahren stromabwärts des Schrittes zum Erzeugen geschickt wird, ohne den Schritt zum Erzeugen von Synthesegas zu durchlaufen, aus einer Hydrodesulfurierungseinheit (3) stromaufwärts des Schrittes zum Erzeugen stammt.

10. Gerät zum Erzeugen und Trennen von Synthesegas, eine Einheit zum Erzeugen von Synthesegas aus einem Ladegas, zum Beispiel aus Naturgas, umfassend, eine Einheit zum Trennen des Synthesegases durch kryogene Destillation, mindestens eine Methanwaschsäule zum Produzieren eines mit Wasserstoff angereicherten Gases und/oder eines mit Kohlenmonoxid angereicherten Gases umfassend, wobei die Einheit zum Erzeugen von Synthesegas ausgeführt ist, um ein Synthesegas zu erzeugen, das weniger als 2,3% an Methan, vorzugsweise weniger als 2% an Methan, oder gar weniger als 1,8% an Methan enthält, und es Mittel zum Anreichern des Synthesegases stromaufwärts der Einheit zum Trennen durch kryogene Destillation umfasst, die imstande ist, ein Synthesegas zu erhalten, das mehr als 2,3% umfasst, wenn das erzeugte Synthesegas weniger als 2,3% an Methan enthält, oder mehr als 2%, wenn das erzeugte Synthesegas weniger als 2% an Methan enthält, oder mehr als 1,8%, wenn das erzeugte Synthesegas weniger als 1,8% an Methan enthält, **dadurch gekennzeichnet, dass** diese Mittel zum Anreichern durch Mittel zum Schicken eines Teils (11, 11A) des methanreichen Ladegases zu einem Behandlungsverfahren stromabwärts der Einheit zum Erzeugen von Synthesegas gebildet werden, ohne die Einheit zum Erzeugen von Synthesegas zu durchlaufen, und dadurch, dass es eine Einheit zum Reinigen von Synthesegas umfasst, das Wasserstoff und Kohlenmonoxid enthält, um das Behandlungsverfahren durchzuführen, um ein gereinigtes Synthesegas zu produzieren.

11. Gerät nach Anspruch 10, wobei die Mittel zum Schicken des Teils (11, 11A) des Ladegases zum Behandlungsverfahren stromabwärts des Schrittes zum Erzeugen, ohne die Einheit zum Erzeugen von Synthesegas zu durchlaufen, mit einem Vorreformer (7) stromaufwärts der Einheit zum Erzeugen (13) verbunden sind.

12. Gerät nach Anspruch 10 oder 11, wobei die Mittel zum Schicken des Teils (11, 11A) des Ladegases zum Behandlungsverfahren stromabwärts des Schrittes zum Erzeugen, ohne die Einheit zum Erzeugen von Synthesegas zu durchlaufen, mit einer Hydrodesulfurierungseinheit (3) stromaufwärts der Einheit zum Erzeugen (13) verbunden sind.

13. Gerät nach einem der Ansprüche 10 bis 12, Mittel zum Schicken des Teils des Ladegases zu einer Einheit zum Eliminieren von Säuren (17) stromabwärts der Einheit zum Erzeugen (13) umfassend, ohne die Einheit zum Erzeugen von Synthesegas zu durchlaufen.

14. Gerät nach einem der Ansprüche 10 bis 13, Mittel zum Schicken des Teils des Ladegases zu einer Adsorptionseinheit (21) stromabwärts der Einheit zum Erzeugen (13), oder direkt zur Einheit zum Trennen (35) umfassend, ohne die Einheit zum Erzeugen von Synthesegas zu durchlaufen.

## Claims

1. Process for generating and separating synthesis gas wherein a synthesis gas (15) is generated from a feed gas and the synthesis gas is separated by cryogenic distillation in an installation (25) containing at least one methane scrubbing column (29) to produce a gas enriched in hydrogen and/or a gas enriched in carbon monoxide, the generated synthesis gas (15) containing at least 2.3% of methane, preferably less than 2% of methane, or even less than 1.8% of methane **characterized in that** the synthesis gas is enriched upstream of the separation by cryogenic distillation, sending a part (11, 11A) of the feed gas to a treatment process downstream of the synthesis gas generation step, without going through the synthesis gas generation step, to obtain a synthesis gas containing more than 2.3% of methane if the synthesis gas generated contains less than 2.3% of methane or more than 2% of methane if the gas generated contains less than 2% of methane or more than 1.8% of methane if the gas generated contains less than 1.8% of methane, the feed gas being rich in methane, and the synthesis gas containing hydrogen and carbon monoxide is purified by the treatment process to produce a purified synthesis gas.

2. Process according to claim 1 wherein the methane-rich gas (51, 53), which may come from an external source, is sent downstream of the synthesis gas generation step and upstream of the cryogenic distillation step.

3. Process according to claim 2 wherein the methane-rich gas (51, 53) is sent to a treatment process upstream of the cryogenic distillation step.

4. Process according to one of the preceding claims wherein the synthesis gas treatment processes include at least one of the following processes: removal of acidic gases, drying, adsorption of carbon dioxide.

5. Process according to one of the preceding claims wherein a methane-rich fluid (43, 51) is withdrawn several theoretical plates above a CO/CH₄ column tank (33) possibly to serve as methane-rich gas, possibly to be sent after pressurising downstream of the synthesis gas generation step, and a liquid is withdrawn from the CO/CH₄ column tank (34) to act as purge.

6. Process according to one of the preceding claims wherein a methane-rich fluid (37) is withdrawn several theoretical plates above the CO/CH₄ column tank possibly to be used for scrubbing at the head of the methane scrubbing column, and a liquid is withdrawn from the CO/CH₄ column tank to act as purge.

7. Process according to claim 6 wherein the purge liquid (34) is mixed with a heavy hydrocarbon-rich liquid (30) obtained by separating the synthesis gas in the cryogenic distillation installation.

8. Process according to one of the preceding claims wherein the part (11, 11A) of the feed gas sent to the treatment process downstream of the generation step, without going through the synthesis gas generation step, comes from a pre-reformer (7) upstream of the generation step.

9. Process according to one of the preceding claims wherein the part (11, 11A) of the feed gas sent to the treatment process downstream of the generation step, without going through the synthesis gas generation step, comes from a hydrodesulphurisation unit (3) upstream of the generation step.

10. Apparatus for generating and separating synthesis gas containing a unit for generating synthesis gas from feed gas, for example, natural gas, a cryogenic distillation separating unit for synthesis gas containing at least one methane scrubbing column to produce a gas enriched in hydrogen and/or a gas enriched in carbon monoxide, the synthesis gas generating unit being adapted to generate synthesis gas containing less than 2.3% of methane, preferably less than 2% of methane, or even less than 1.8% of methane and wherein it contains methods of enriching the synthesis gas upstream of the cryogenic distillation separating unit able to obtain a synthesis gas containing more than 2.3% if the synthesis gas generated contains less than 2.3% of methane or more than 2% if the synthesis gas generated contains less than 2% of methane or more than 1.8% if the synthesis gas generated contains less than 1.8% of methane **characterized in that** these methods of enrichment are composed of methods for sending a part (11, 11A) of the methane-rich feed gas to a treatment process downstream of the synthesis gas generating unit, without going through the synthesis gas generating unit, and wherein it contains a purification unit for synthesis gas containing hydrogen and carbon monoxide for carrying out the treatment process to produce a purified synthesis gas.

11. Apparatus according to claim 10 wherein the methods for sending the part (11, 11A) of the feed gas sent to the treatment process downstream of the generation step, without going through the synthesis gas generation step, are connected to a pre-reformer (7) upstream of the generating unit (13).

12. Apparatus according to claim 10 or 11 in which the means for sending a part (11, 11A) of the feed gas to the treatment process downstream of the generation step, without going through the synthesis gas generation step, are connected to a hydrodesulphurisation unit (3) upstream of the generating unit (13).

13. Apparatus according to one of claims 10 to 12 comprising means for sending the feed gas part to an acid removal unit (17) downstream of the generating unit (13) without going through the synthesis gas generating unit.

14. Apparatus according to one of claims 10 to 13 comprising means for sending the feed gas part to an adsorption unit (21) downstream of the generating unit (13) or directly to the separating unit (35) without going through the synthesis gas generating unit.
